# FASCICULE DE BREVET EUROPEEN

(11) **EP 2 764 462 B1**
(45) Date de publication et mention de la délivrance du brevet: **13.03.2019**
(21) Numéro de dépôt: 12769121.0
(22) Date de dépôt: 08.10.2012
(51) Int. Cl.: G06F 21/54, G06F 21/53, G06F 8/60, G06F 21/31, G06F 21/52

(54) **PROCEDE DE GENERATION, A PARTIR D'UN FICHIER INITIAL DE PAQUETAGE COMPORTANT UNE APPLICATION A SECURISER ET UN FICHIER INITIAL DE CONFIGURATION, D'UN FICHIER DE PAQUETAGE POUR LA SECURISATION DE L'APPLICATION, PRODUIT PROGRAMME D'ORDINATEUR ET DISPOSITIF INFORMATIQUE ASSOCIES**
VERFAHREN ZUR ERZEUGUNG EINER PAKETDATEI ZUR SICHERUNG EINER ANWENDUNG AUS EINER ORIGINAL-PAKETDATEI MIT DER ZU SICHERNDEN ANWENDUNG UND EINER ORIGINAL-KONFIGURATIONSDATEI SOWIE ZUGEHÖRIGES COMPUTERPROGRAMMPRODUKT UND COMPUTERVORRICHTUNG
METHOD OF GENERATING, FROM AN INITIAL PACKAGE FILE COMPRISING AN APPLICATION TO BE SECURED AND AN INITIAL CONFIGURATION FILE, A PACKAGE FILE FOR SECURING THE APPLICATION, AND ASSOCIATED COMPUTER PROGRAM PRODUCT AND COMPUTING DEVICE

(30) Priorité: 06.10.2011 FR 1103046
(43) Date de publication de la demande: 13.08.2014
(73) Titulaire: THALES, 92200 Neuilly-sur-Seine (FR)
(72) Inventeur: ECH-CHERGUI, Ben Youcef, F-49309 Cholet (FR); BIOTEAU, Adrien, 49309 (FR)
(74) Mandataire: Lavoix
(86) Numéro de dépôt international: PCT/EP2012/069876
(87) Numéro de publication internationale: WO 2013/050602

(56) Documents cités:
- US-A1- 2002 065 776
- US-A1- 2007 101 435

## Description

La présente invention concerne un procédé de génération, à partir d'un fichier initial de paquetage comportant une application à sécuriser et un fichier initial de configuration, d'au moins un fichier de paquetage pour la sécurisation de ladite application, le procédé de génération étant mis en oeuvre par un dispositif informatique comprenant une unité de traitement d'informations et une mémoire.

L'invention concerne également un produit programme d'ordinateur comportant des instructions logicielles qui, lorsque mis en oeuvre par une unité de traitement d'informations intégrée à un appareil informatique, met en oeuvre un tel procédé de génération de fichier(s) de paquetage.

L'invention concerne également un dispositif informatique comprenant une unité de traitement d'informations et une mémoire associée à l'unité de traitement d'informations.

Le document US 2002/0065776 A1 décrit un système pour sécuriser une application pour l'exécution dans un ordinateur. Le document US 2007/101435 A1 décrit un procédé de création d'un environnement de travail sécurisé.

On connaît un appareil informatique, tel qu'un terminal mobile, géré par une plateforme Android hébergeant des applications. La plateforme Android comporte un noyau Linux (de l'anglais *Linux Kernel*), un ensemble de bibliothèques de fonctions en langage C ou C++, et une machine virtuelle Dalvik (de l'anglais *Dalvik Virtual Machine*) propre à exécuter les applications hébergées par la plateforme Android.

Le fonctionnement d'applications sensibles nécessite d'être sécurisé afin de protéger les données traitées par ces applications et de faire face aux menaces de récupération d'informations résultant de la perte ou du vol du terminal mobile, ou encore de l'interception de communications entre le terminal mobile et un autre équipement informatique. Une solution de sécurisation des données consiste alors à modifier le code source ou binaire de chacune des applications à sécuriser afin de leur faire appeler des bibliothèques spécialisées comportant des fonctions de sécurisation adéquates.

WO 2012/109196 A1 décrit un procédé de modification du code source ou binaire de chacune des applications à sécuriser, puis de recompilation du code source ou binaire modifié, afin que les applications ainsi modifiées appellent des bibliothèques spécialisées comportant des fonctions de sécurisation adéquates.

Toutefois, une telle sécurisation des applications nécessite de modifier le code source ou binaire de chacune des applications, ce qui est particulièrement contraignant, et n'est en outre pas toujours autorisé par le fournisseur de l'application lorsque la modification du code est effectuée par un tiers.

Un but de l'invention est donc de proposer un procédé de génération, à partir d'un fichier initial de paquetage comportant une application à sécuriser et un fichier initial de configuration, d'un fichier de paquetage, ce procédé de génération permettant de sécuriser l'application lors de l'exécution du fichier de paquetage tout en limitant les modifications du code du système d'exploitation, de l'environnement applicatif ou encore de l'application à sécuriser.

A cet effet, l'invention a pour objet un procédé de génération de fichier(s) de paquetage selon la revendication 1.

Suivant d'autres aspects avantageux de l'invention, le procédé de génération est selon l'une quelconque des revendications 2 à 9.

L'invention a également pour objet un produit programme d'ordinateur selon la revendication 10.

L'invention a également pour objet un dispositif informatique selon la revendication 11.

Ces caractéristiques et avantages de l'invention apparaîtront à la lecture de la description qui va suivre, donnée uniquement à titre d'exemple, et faite en référence aux dessins annexés, sur lesquels :
- la figure 1 est une vue schématique d'un dispositif informatique selon l'invention, le dispositif informatique étant propre à générer au moins un fichier de paquetage destiné à être exécuté par un appareil informatique, tel qu'un terminal mobile,
- la figure 2 est une représentation schématique d'une mémoire de l'appareil informatique de la figure 1,
- la figure 3 est un organigramme d'un procédé de génération de fichier(s) de paquetage, selon un premier mode de réalisation de l'invention,
- la figure 4 est un organigramme d'un procédé de préparation d'un environnement d'exécution d'une application à sécuriser,
- la figure 5 est une représentation dynamique de la préparation de l'environnement d'exécution de l'application à sécuriser et de l'exécution de ladite application, et
- la figure 6 est une vue analogue à celle de la figure 3, selon un deuxième mode de réalisation de l'invention.

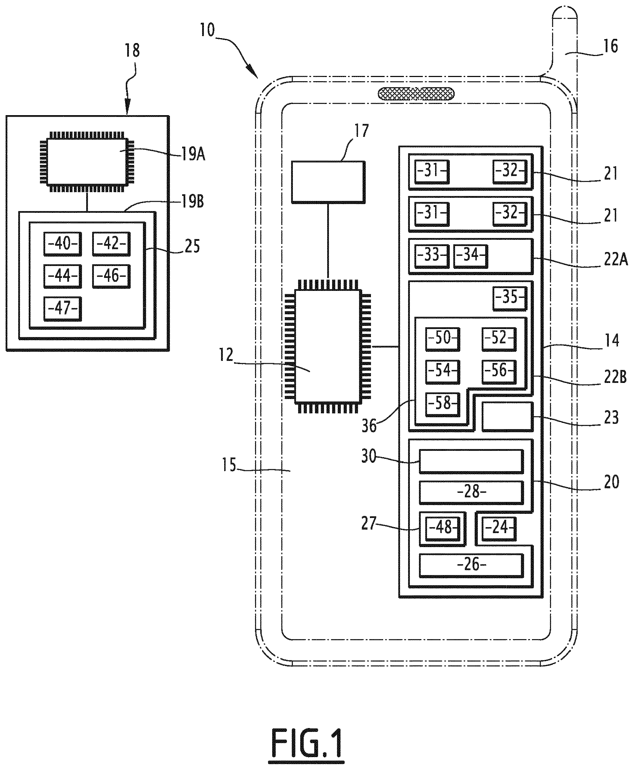

Sur la figure 1, un appareil informatique 10, tel qu'un terminal mobile, comprend une première unité de traitement d'informations 12, une première mémoire 14 associée à la première unité de traitement d'informations et un écran 15.

Dans l'exemple de réalisation de la figure 1, l'appareil informatique 10 est un téléphone mobile et comprend en outre une antenne radioélectrique 16 et un émetteur-récepteur radioélectrique 17 connectés à la première unité de traitement d'informations.

Un dispositif informatique 18 comprend une deuxième unité de traitement d'informations 19A et une deuxième mémoire 19B associée à la deuxième unité de traitement d'informations 19A.

La première unité de traitement d'informations 12 comporte, par exemple, un processeur de données.

La première mémoire 14 comporte un système d'exploitation 20 et une pluralité de fichiers de paquetage 21, également appelés fichiers de paquetage non sensibles, et de fichiers de paquetage 22A, 22B, également appelés fichiers de paquetage sensibles, à savoir un premier fichier de paquetage 22A et un deuxième fichier de paquetage 22B.

En complément, la première mémoire 14 comporte un fichier de paquetage auxiliaire 23.

La première mémoire 14 comporte également une bibliothèque de sécurisation 24 propre à sécuriser par exemple le stockage de données et/ou l'échange de données avec un autre appareil informatique.

L'émetteur-récepteur radioélectrique 17 comporte des moyens d'émission et de réception de signaux radioélectriques via l'antenne radioélectrique 16. L'émetteur-récepteur radioélectrique 17 est conforme à la norme de communication GPRS (de l'anglais *General Packet Radio Service*), ou encore à la norme UMTS (de l'anglais *Universal Mobile Telecommunication System).*

L'antenne radioélectrique 16 et l'émetteur-récepteur radioélectrique 17 sont propres à permettre l'établissement d'une liaison radioélectrique entre l'appareil informatique 10 et un autre appareil informatique comportant une antenne et un émetteur-récepteur radioélectrique conformes à la même norme de communication.

La deuxième unité de traitement d'information 19A comporte, par exemple, un processeur de données.

La deuxième mémoire 19B comporte une application 25 de génération, à partir d'un fichier initial de paquetage, non représenté, d'au moins un fichier de paquetage sensible 22A, 22B.

Le système d'exploitation 20 comporte un noyau 26, un ensemble 27 de bibliothèques de fonctions, une machine virtuelle 28 et une structure d'accueil applicative 30 (de l'anglais *Application framework*).

Chaque fichier de paquetage non sensible 21 comporte une application non sensible 31 sous forme d'un fichier binaire et un fichier de configuration 32 associé, l'application non sensible 31 ne nécessitant pas d'être sécurisée.

Le premier fichier de paquetage sensible 22A comporte un premier fichier de configuration 33 et une application à sécuriser 34 sous forme d'un fichier binaire. Le deuxième fichier de paquetage sensible 22B comporte un deuxième fichier de configuration 35 et une application 36 de création dynamique d'un environnement d'exécution de l'application à sécuriser, l'application de création de l'environnement d'exécution 36 étant sous forme d'un fichier binaire.

En complément, le fichier de paquetage auxiliaire 23 comporte une application, non représentée, d'authentification de l'utilisateur et de récupération d'une clé de déverrouillage de la bibliothèque de sécurisation. Le fichier de paquetage auxiliaire 23 comporte un troisième fichier de configuration, non représenté, associé à l'application d'authentification de l'utilisateur et de récupération de la clé de déverrouillage. L'authentification de l'utilisateur est effectuée à l'aide, par exemple, d'une carte à puce incluse dans l'appareil 10, ou encore d'une carte de communication en champ proche extérieure à l'appareil, également appelée carte NFC (de l'anglais *Near Field Communication*). Ladite application est également propre à vérifier des permissions associées à une application tierce pour le contrôle de l'accès à ladite application tierce par l'utilisateur.

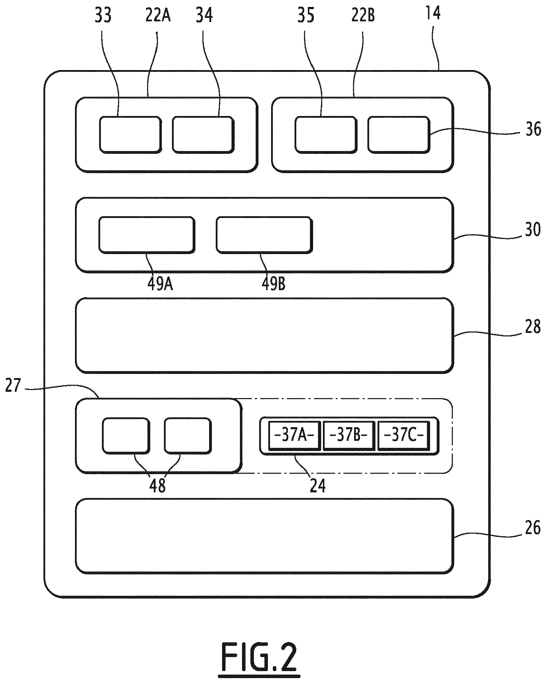

La bibliothèque de sécurisation 24 comporte une fonction 37A de sécurisation du stockage de données, une fonction 37B de sécurisation d'échange de données avec un autre appareil informatique et une fonction 37C de suppression d'évènement(s) de débogage, comme représenté sur la figure 2.

Dans l'exemple des figures 1 et 2, la bibliothèque de sécurisation 24 est une bibliothèque spécifique distincte des bibliothèques natives incluses dans le système d'exploitation 20.

En variante, tel qu'illustré par les traits pointillés sur la figure 2, la bibliothèque de sécurisation 24 est une bibliothèque native incluse dans l'ensemble de bibliothèques 27 du système d'exploitation livré par le fournisseur du système d'exploitation.

L'application de génération de fichier(s) de paquetage 25 comporte des moyens 40 d'extraction, à partir du fichier initial de paquetage, de l'application à sécuriser 34 et d'un fichier initial de configuration, non représenté, et des moyens 42 de création du premier fichier de configuration 33 et du deuxième fichier de configuration 35, chacun à partir du fichier initial de configuration.

L'application de génération de fichier(s) de paquetage 25 comporte des moyens 44 de création de l'application de création dynamique de l'environnement d'exécution 36, l'application de création dynamique de l'environnement d'exécution 36 étant adaptée pour mettre en oeuvre le chargement de la bibliothèque de sécurisation 24, la substitution, parmi un ou des appel(s) de fonction associé(s) à ladite application à sécuriser 34, d'au moins un appel à une fonction non sécurisée par un appel à une fonction correspondante 37A, 37B, 37C de la bibliothèque de sécurisation 24, et le lancement de l'application à sécuriser 34 après ladite substitution.

L'application de génération de fichier(s) de paquetage 25 comporte des moyens 46 d'encapsulation, d'une part, du premier fichier de configuration 33 et de l'application à sécuriser 34 dans le premier fichier de paquetage 22A, et d'autre part, du deuxième fichier de configuration 35 et de l'application de création dynamique de l'environnement d'exécution 36 dans le deuxième fichier de paquetage 22B.

En complément, l'application de génération de fichier de paquetage 25 comporte des moyens 47 de protection cryptographique des premier et deuxième fichiers de paquetage préalablement générés.

Comme connu en soi, le noyau 26 forme une couche d'abstraction entre, d'une part, une partie matérielle comportant notamment la première unité de traitement d'informations 12, la première mémoire 14 et l'émetteur-récepteur radioélectrique 17, et d'autre part, le reste du système d'exploitation 20, notamment l'ensemble de bibliothèques 27. Le noyau 26 est adapté pour gérer des services essentiels tels que la sécurité du système d'exploitation, la gestion de la mémoire, ou encore la gestion des processus.

L'ensemble de bibliothèques 27 comprend une bibliothèque 48 de fonctions non sécurisées.

La machine virtuelle 28 est connue en soi, et est propre à exécuter chaque fichier binaire contenu dans les fichiers de paquetage 21, 22, 23 respectifs.

La structure d'accueil applicative 30 comporte des services 49A, 49B à la disposition des applications 31, 34, 36, tels qu'un service 49A de gestion d'activité, un service 49B de gestion des fichiers de paquetage associés aux applications.

Chaque application 31, 34, 36 est en forme d'un fichier binaire comportant un code binaire, également appelé code intermédiaire (de l'anglais *bytecode*) destiné à être exécuté par la machine virtuelle 28. L'exécution de l'application 31, 34, 36 par la machine virtuelle 28 est une interprétation du code intermédiaire de l'application.

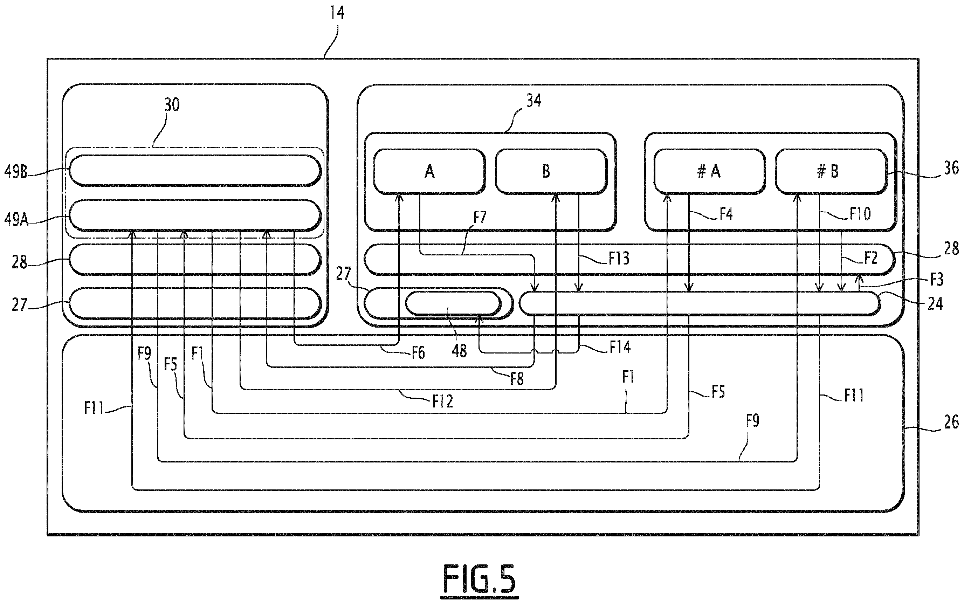

Chaque application 31, 34, 36 comprend un ou plusieurs composants A, B, #A, #B, comme représenté sur la figure 5, les composants présentant différents types, tels qu'une activité, un service, un fournisseur de contenu, ou encore un récepteur de diffusion. Chaque composant A, B, #A, #B joue un rôle différent dans le comportement de l'application, et est activable individuellement, même par d'autres applications.

Dans le mode de réalisation décrit, le système d'exploitation 20 est le système d'application Android® de la société Google. Le noyau 26 est alors basé sur un noyau Linux, plus précisément sur la version 2.6 du noyau Linux. L'ensemble de bibliothèques 27 est écrit en langage informatique C/C++. La machine virtuelle 28 est la machine virtuelle Dalvik. Les applications 31, 34, 36 sont écrites en langage Java et sont en forme d'un code binaire exécutable par la machine virtuelle Dalvik 28.

En variante, l'invention s'applique à n'importe quel système d'exploitation de même type que le système d'exploitation Android®. En particulier, l'invention s'applique à un système d'exploitation comportant un noyau, une machine virtuelle destinée à exécuter les applications et un ensemble de bibliothèques de fonctions accessibles par le noyau et par la machine virtuelle.

Chaque fichier de configuration 32, 33, 35 comporte des informations de nommage et d'indication de la version de l'application, les déclarations de chacun des composants de l'application, des filtres de message permettant à l'application d'identifier de manière prédéfinie certains messages parmi ceux reçus du système d'exploitation 20 ou d'autres applications, et éventuellement des méta-données.

Dans le cas d'Android®, chaque fichier de configuration 32, 33 35 est également appelé fichier Manifest (de l'anglais *Manifest file*). Les déclarations de composant sont alors référencées par les expressions suivantes <activity>, <service>, <provider> ou <receiver>, selon que les composants sont du type activité, service, fournisseur de contenu, ou encore récepteur de diffusion (de l'anglais *activity, service, content provider,* ou encore *broadcast receiver*). Les filtres de message, également appelés déclarations de messages, sont encore appelés Intent (de l'anglais *Intent filters*). Les méta-données (de l'anglais *Meta-data*) sont susceptibles de décrire de façon complémentaire un composant.

Le fichier de configuration non sensible 32 est connu en soi.

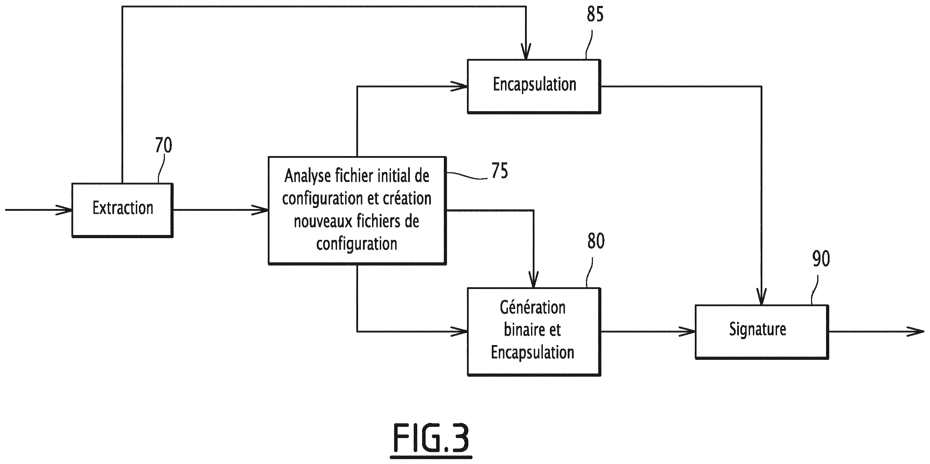

Le premier fichier de configuration 33 comporte des informations de nommage et d'indication de la version de l'application à sécuriser 34, et contient les déclarations des composants de l'application à sécuriser 34. Le premier fichier de configuration 33 est créé à partir du fichier initial de configuration et en modifiant ledit fichier initial de configuration afin que l'application de création de l'environnement d'exécution 36 soit lancée à la place de l'application à sécuriser 34 lors de l'exécution des premier et deuxième fichiers de paquetage 22A, 22B. La manière de créer le premier fichier de configuration 33 à partir du fichier initial de configuration sera décrite plus en détail par la suite à l'aide de l'organigramme du procédé de génération de fichier(s) de paquetage de la figure 3.

L'application à sécuriser 34 est destinée à appeler au moins une fonction de la bibliothèque de fonction non sécurisée 48 lors de son exécution.

Le deuxième fichier de configuration 35 comporte des informations de nommage et d'indication de la version de l'application de création de l'environnement d'exécution 36, et contient les déclarations des composants de l'application de création de l'environnement d'exécution 36. La façon de créer le deuxième fichier de configuration 35 sera décrite plus en détail par la suite à l'aide de l'organigramme du procédé de génération de fichier(s) de paquetage de la figure 3.

L'application de création dynamique de l'environnement 36 comporte des moyens 50 de chargement de la bibliothèque de sécurisation, des moyens 52 de substitution, parmi le ou les appels de fonction associés à l'application à sécuriser 34, d'au moins un appel à une fonction non sécurisée par un appel à une fonction correspondante de la bibliothèque de sécurisation 24.

En complément, l'application de création de l'environnement d'exécution 36 comporte des moyens 54 d'authentification de l'utilisateur de l'appareil informatique et de récupération d'une clé de déverrouillage de la bibliothèque de sécurisation, et des moyens 56 d'interception et de filtrage des messages émis ou reçus par l'application à sécuriser 34.

L'application de création de l'environnement de l'exécution 36 comporte des moyens 58 de lancement de l'application à sécuriser suite à la substitution de l'appel à la fonction non sécurisée par l'appel à la fonction de sécurisation.

L'application de création de l'environnement d'exécution 36 est une application dédiée à la ou aux applications à sécuriser 34, et est distincte du système d'exploitation 20.

La fonction de sécurisation du stockage de données 37A est propre à protéger des données sensibles stockées dans une zone mémoire de la première mémoire 14, par exemple via une protection cryptographique des données stockées. La protection est une protection en confidentialité afin d'interdire l'accès de ces données à une personne non autorisée, et également une protection en intégrité afin d'empêcher une modification du contenu de ces données.

La fonction de sécurisation d'échange de données 37B est propre à protéger des échanges de données entre l'application à sécuriser 34 et l'autre appareil informatique, non représenté.

La fonction de suppression d'événements de débogage 37C est propre à supprimer les évènements de débogage avant qu'ils ne soient enregistrés dans la première mémoire 14, les évènements de débogage étant générés lors de l'exécution de marqueurs contenus dans le code de l'application à sécuriser 34. Ces évènements de débogage, servant à déverminer le code de l'application avant que le code ne soit finalisé, sont parfois conservés dans le code de l'application, et sont alors susceptibles d'engendrer une faille de sécurité.

La bibliothèque de fonction(s) non sécurisée(s) 48 est connue en soi. Dans le cas du système d'exploitation Android®, la bibliothèque de fonction(s) non sécurisée(s) 48 est une bibliothèque de fonction(s) écrite(s) en langage informatique C/C++.

Dans l'exemple de réalisation de la figure 1, les moyens d'authentification et de récupération 54 sont des moyens d'appel de l'application d'authentification de l'utilisateur et de récupération de la clé de déverrouillage encapsulée dans le fichier de paquetage auxiliaire 23. Autrement dit, les moyens d'authentification et de récupération 54 comportent seulement un point d'entrée vers ladite application d'authentification de l'utilisateur et de récupération de la clé.

En variante, la première mémoire 14 ne comporte pas le fichier de paquetage auxiliaire, et les moyens d'authentification et de récupération 54 de chaque application de création de l'environnement d'exécution comprennent les fonctionnalités de l'application d'authentification de l'utilisateur et de récupération de la clé de déverrouillage, et sont propres à authentifier l'utilisateur de l'appareil informatique 10, puis en cas d'authentification réussie, à récupérer la clé de déverrouillage de la bibliothèque de sécurisation 24.

Le procédé de génération de fichiers de paquetage selon l'invention va être à présent décrit à l'aide de l'organigramme de la figure 3.

Lors de l'étape initiale 70, l'application à sécuriser 34 et le fichier initial de configuration sont extraits à partir du fichier initial de paquetage.

Le fichier initial de configuration ainsi extrait est ensuite utilisé lors de l'étape suivante 75 pour la création, d'une part, du premier fichier de configuration 33, et d'autre part, du deuxième fichier de configuration 35.

Le premier fichier de configuration 33 est créé en modifiant le fichier initial de configuration afin que l'application de création de l'environnement d'exécution 36 soit lancée à la place de l'application à sécuriser 34 lors de l'exécution des fichiers de paquetage 22A, 22 B.

Les filtres de message, également appelés Intent, pour les activités déclarées dans le fichier initial de configuration sont, par exemple, supprimés dans le premier fichier de configuration 33.

En complément, le nom du processus déclaré dans le premier fichier de configuration 33 est un nom prédéterminé, et ce nom de processus sera le même dans le deuxième fichier de configuration 35 afin de garantir que l'application à sécuriser 34 et l'application de création de l'environnement d'exécution 36 seront exécutées dans le même processus.

Le deuxième fichier de configuration 35 est, lors de l'étape 75, également créé à partir du fichier initial de configuration. Le deuxième fichier de configuration 35 contient, par exemple, les mêmes déclarations de composant que celles contenues dans le fichier initial de configuration. Les composants déclarés dans le deuxième fichier de configuration 35 reprennent, par exemple, les mêmes filtres de message que ceux spécifiés dans le fichier initial de configuration pour les composants correspondants.

En complément, au moins un composant déclaré dans le premier fichier de configuration 33 et dans le deuxième fichier de configuration 35 est un fournisseur de contenu, et le fournisseur de contenu, également appelé *content provider,* est déclaré dans le deuxième fichier de configuration 35 avec une priorité plus élevée que celle du fournisseur de contenu déclaré dans le premier fichier de configuration 33. Cet ordre de priorité de la déclaration du fournisseur de contenu plus élevé dans le deuxième fichier de configuration 35 que celui correspondant dans le premier fichier de configuration 33 permet que le fournisseur de contenu de l'application de création de l'environnement d'exécution 36 soit lancé avant le fournisseur de contenu de l'application à sécuriser 34.

En complément, comme indiqué précédemment pour le premier fichier de configuration 33, le nom du processus déclaré dans le deuxième fichier de configuration 35 est un nom prédéterminé et identique à celui du processus déclaré dans le premier fichier de configuration 33, afin de garantir que l'application à sécuriser 34 et l'application de création de l'environnement d'exécution 36 seront exécutées dans le même processus.

À l'issue de la création des premier et deuxième fichiers de configuration 33, 35, le fichier binaire de l'application de création dynamique de l'environnement d'exécution 36 est créé lors de l'étape suivante 80. Le fichier binaire créé est tel que l'application de création dynamique de l'environnement d'exécution 36 est adaptée pour mettre en oeuvre le chargement de la bibliothèque de sécurisation 24, la substitution, parmi un ou des appels de fonction associés à l'application à sécuriser 34, d'au moins un appel à une fonction non sécurisée par un appel à une fonction correspondante de la bibliothèque de sécurisation 24, et le lancement de l'application à sécuriser 34 après ladite substitution.

En complément, l'application de création dynamique de l'environnement d'exécution 36 est adaptée pour verrouiller la bibliothèque de sécurisation 24 préalablement chargée et la ou des substitution(s) d'appel de fonction effectuée(s).

En complément, l'application de création de l'environnement d'exécution 36 est adaptée pour requérir l'authentification de l'utilisateur de l'appareil informatique 10, puis en cas d'authentification réussie, récupérer une clé de déverrouillage de la bibliothèque de sécurisation 24.

En complément, l'application de création de l'environnement d'exécution 36 est adaptée pour intercepter et traiter des messages échangés entre le système d'exploitation et l'application à sécuriser 34, lesdits messages étant traités par la bibliothèque de sécurisation 24. Les messages interceptés concernent notamment la mise en veille, le réveil de l'application à sécuriser 34, le stockage de données dans la première mémoire 14 et l'échange de données avec un autre appareil informatique.

Lors de cette étape 80, le fichier binaire de l'application de création dynamique de l'environnement d'exécution 36 ainsi créé est ensuite encapsulé avec le deuxième fichier de configuration 35, préalablement créé lors de l'étape 75, dans le deuxième fichier de paquetage 22B.

Lors de l'étape 85, le premier fichier de configuration 33 et le fichier binaire de l'application à sécuriser 34 sont encapsulés dans le premier fichier de paquetage 22A. L'homme du métier observera que le fichier binaire de l'application à sécuriser 34 n'est pas modifié lors de la génération des fichiers de paquetage 22A, 22 B suivant le procédé de génération.

En complément, l'application de génération de fichier(s) de paquetage 25 ajoute également la bibliothèque de sécurisation 24 dans le deuxième fichier de paquetage 22B.

En complément, lors de l'étape 90 optionnelle, chaque fichier de paquetage 22A, 22B généré est protégé cryptographiquement avec une ou plusieurs clés de cryptographiques et à l'aide des moyens de protection cryptographique 47. La ou les clés de cryptographiques utilisées sont de préférence différentes de la clé cryptographique ayant éventuellement servi à la protection du fichier initial de paquetage.

La protection cryptographique du premier fichier de paquetage 22A et la protection cryptographique du deuxième fichier de paquetage 22B sont, par exemple, effectuées avec la même clé de cryptographique, ce qui permet d'assurer qu'une éventuelle autre application cherchant à se faire passer pour l'application à sécuriser 34 ne puisse pas être installée sur le système d'exploitation 20. Cette autre application, n'ayant pas été protégée cryptographiquement avec la même clé, ne pourra pas être exécutée dans le même processus que l'application de création de l'environnement d'exécution 36.

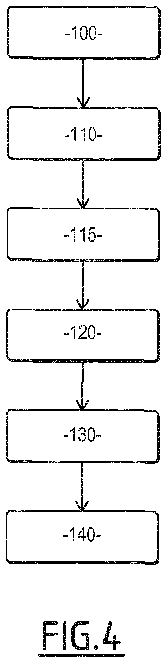

Le fonctionnement de l'appareil informatique 10 va désormais être expliqué à l'aide des figures 4 et 5.

Avant d'être stocké dans la première mémoire 14, chaque fichier de paquetage 22A, 22B est créé à l'aide de l'application de génération de fichier(s) de paquetage 25 comme cela a été décrit précédemment.

La figure 4 illustre un procédé de création dynamique d'un environnement d'exécution de l'application à sécuriser 34 mis en oeuvre par l'application de création de l'environnement d'exécution 36.

Lors de l'étape initiale 100, la bibliothèque de sécurisation 24 est chargée afin que les fonctions de sécurisation 37A, 37B, 37C contenues dans ladite bibliothèque de sécurisation 24 soient disponibles pour la machine virtuelle 28 lors du lancement ultérieur de l'application à sécuriser 34.

L'application de création de l'environnement d'exécution 36 substitue ensuite lors de l'étape 110 au moins un appel à une fonction non sécurisée, parmi le ou les appels de fonction associés à ladite application à sécuriser 34, par un appel à une fonction correspondante 37A, 37B, 37C de la bibliothèque de sécurisation 24 précédemment chargée.

L'étape de substitution 110 comporte, par exemple, la suppression d'un lien dynamique entre ladite application à sécuriser 34 et la fonction non sécurisée, et la création d'un lien dynamique de substitution entre ladite application à sécuriser 34 et la fonction correspondante 37A, 37B, 37C de la bibliothèque de sécurisation 24.

Dans le mode de réalisation décrit, tous les appels à une fonction de stockage de données parmi les appels de fonction associés à ladite application à sécuriser 34 sont substitués par des appels à la fonction de sécurisation du stockage de données 37A.

Tous les appels à une fonction d'échange de données avec un autre appareil informatique parmi les appels de fonction associés à ladite application à sécuriser 34 sont substitués par des appels à la fonction de sécurisation d'échange de données 37B.

Tous les appels à une fonction d'ajout d'événement de débogage parmi les appels de fonction associés à ladite application à sécuriser 34 sont substitués par des appels à la fonction de suppression d'événements de débogage 37C.

En complément, l'application de création de l'environnement d'exécution 36 effectue ensuite, lors de l'étape 115, le verrouillage de la bibliothèque de sécurisation 24 chargée lors de l'étape 100 et de la ou des substitution(s) d'appel de fonction effectuée(s) lors de l'étape 110 précédente.

Lorsque l'étape 110 de substitution est effectuée via l'introduction d'une fonction de substitution dans l'application à sécuriser elle-même ou dans la machine virtuelle 28 au moyen d'un lien dynamique, la fonction de substitution étant issue de l'application de création de l'environnement d'exécution 36, l'étape de verrouillage consiste, par exemple, à remplacer la référence de la fonction de substitution par une référence à une nouvelle fonction de substitution.

Le code correspondant au code des étapes 110 et 115, ainsi qu'à la nouvelle fonction de substitution et aux fonctions de sécurisation, est positionné dans la bibliothèque de sécurisation 24. Cette nouvelle fonction de substitution opère un filtrage sur les demandes de substitution en refusant de substituer les appels de fonction traités à l'étape 110, et en autorisant la substitution des autres appels de fonction.

En complément, l'application de création de l'environnement d'exécution 36 requiert ensuite, lors de l'étape 120, l'authentification de l'utilisateur de l'appareil informatique 10, puis en cas d'authentification réussie, récupère une clé de déverrouillage de la bibliothèque de sécurisation 24.

En complément, lors de l'étape 130, l'application de création de l'environnement d'exécution 36 intercepte et traite des messages échangés entre le système d'exploitation et l'application à sécuriser, lesdits messages étant traités par la bibliothèque de sécurisation 24. Les messages interceptés concernent notamment la mise en veille, le réveil de l'application à sécuriser 34, le stockage de données dans la première mémoire 14 et l'échange de données avec un autre appareil informatique.

L'application de création de l'environnement de l'exécution 36 lance enfin lors de l'étape 140 l'application à sécuriser 34.

Après le lancement de l'application à sécuriser 34 et de par la ou les substitution(s) précédemment effectuée(s) d'appel de fonction, le ou les appels correspondants générés par l'application à sécuriser 34 ou à destination de l'application à sécuriser, éventuellement via le système d'exploitation 20, sont transmis en premier lieu à la bibliothèque de sécurisation 24, et si cette dernière l'autorise, au besoin à la bibliothèque non sécurisée 48.

La création de l'environnement d'exécution de l'application à sécuriser 34 est dynamique étant donné qu'elle est effectuée à chaque exécution de ladite application et suite à la réception par le système d'exploitation 20 d'un ordre d'exécution de ladite application.

La figure 5 est une représentation de la création dynamique de l'environnement d'exécution de l'application à sécuriser 34 et de l'exécution de ladite application.

Suite à la réception par le système d'exploitation 20 d'un ordre d'exécution du deuxième fichier de paquetage 22B, le système d'exploitation commence par lancer le composant #A de l'application de création de l'environnement d'exécution 36 à l'aide du service de gestion d'activité 49A (flèche F1), suivant les informations contenues dans les premier et deuxième fichiers de configuration 33, 35, afin que l'application de création de l'environnement d'exécution 36 soit lancée à la place de l'application à sécuriser 34.

L'application de création de l'environnement d'exécution 36 charge alors la bibliothèque de sécurisation 24 (flèche F2), conformément à l'étape initiale 100 du procédé de création de l'environnement d'exécution. Les fonctions de sécurisation 37A, 37B, 37C contenues dans ladite bibliothèque de sécurisation sont ainsi disponibles pour les actions ultérieures de la machine virtuelle 28. Les liens dynamiques entre l'application à sécuriser 34 et certaines fonctions non sécurisées sont supprimés, et les liens dynamiques de substitution correspondants sont créés entre ladite application à sécuriser 34 et les fonctions correspondantes 37A, 37B, 37C de la bibliothèque de sécurisation 24, conformément à l'étape 110 décrite précédemment (flèche F3).

Le composant #A requiert ensuite, auprès du système d'exploitation, le lancement du composant A correspondant de l'application à sécuriser 34, (flèche F4). Cette requête est interceptée par la bibliothèque de sécurisation 24 afin de requérir l'authentification de l'utilisateur, puis en cas d'authentification réussie, de récupérer la clé de déverrouillage de la bibliothèque de sécurisation 24. En cas d'authentification réussie de l'utilisateur, la requête est transmise au service de gestion d'activité 49A du système d'exploitation (flèche F5).

Le système d'exploitation 20 lance alors le composant A de l'application à sécuriser 34 à l'aide du service de gestion d'activité 49A, conformément à l'étape 140 décrite précédemment (flèche F6). Le lancement est effectué dans le même processus que celui de l'application de création de l'environnement d'exécution 36 suivant les informations contenues dans le premier fichier de configuration 33.

Au cours de l'exécution de l'application à sécuriser 34, le composant A requiert, auprès du système d'exploitation 20, le lancement du composant B, et cette requête est alors dirigée par la machine virtuelle 28 vers la bibliothèque de sécurisation 24 (flèche F7) de par l'étape précédente de substitution de liens dynamiques. La requête est alors modifiée par la bibliothèque de sécurisation 24 afin que le système d'exploitation 20 lance le composant #B au lieu du composant B de l'application à sécuriser 34, puis transmise au service de gestion d'activité 49A (flèche F8). Le système d'exploitation 20 lance donc le composant #B (flèche F9).

Le composant #B requiert ensuite, auprès du système d'exploitation, le lancement du composant B correspondant de l'application à sécuriser 34, (flèche F10). Cette requête est interceptée par la bibliothèque de sécurisation 24 afin d'effectuer des traitements de sécurisation correspondants, puis transmise au service de gestion d'activité 49A du système d'exploitation (flèche F11).

Le système d'exploitation 20 lance alors le composant B de l'application à sécuriser 34 à l'aide du service de gestion d'activité 49A (flèche F12). Le composant B, souhaitant ensuite stocker un fichier de données, appelle à cet effet une fonction de stockage (flèche F13). De par l'étape précédente de substitution de liens dynamiques, la fonction de sécurisation du stockage de données 37A de la bibliothèque de sécurisation est alors automatiquement appelée, et le fichier de données est chiffré par ladite fonction sécurisée 37A avant d'être stocké dans la première mémoire 14 (flèche F14).

L'homme du métier comprendra que si le composant avait souhaité échanger des données avec un autre appareil informatique et avait appelé à cet effet une fonction d'échange de données, alors la fonction de sécurisation d'échange de données 37B aurait été, de manière analogue, appelée automatiquement de par l'étape précédente de substitution de liens dynamiques.

L'homme du métier comprendra également que si le composant avait souhaité ajouter des événements de débogage et avait appelé à cet effet une fonction d'ajout d'événement de débogage, alors la fonction de suppression d'événements de débogage 37C aurait été, de manière analogue, appelée automatiquement de par l'étape précédente de substitution de liens dynamiques.

Dans l'exemple de réalisation de la figure 5, les différentes requêtes décrites sont effectuées en mode superviseur et passent alors par le noyau 26. L'homme du métier comprendra que certaines requêtes sont, en variante, susceptibles d'être effectuées en mode utilisateur sans passer par le noyau 26.

L'appareil informatique 10, via la mise en oeuvre du procédé de création dynamique de l'environnement d'exécution de l'application à sécuriser 34 à l'aide de l'application de création de l'environnement d'exécution 36, permet donc de sécuriser le fonctionnement de l'application 34, notamment en ce qui concerne le lancement des composants, le stockage de données ou l'échange de données avec un autre appareil informatique, ceux-ci étant automatiquement chiffrés via les fonctions adéquates de la bibliothèque de sécurisation 24.

Cette sécurisation de l'application 34 nécessite seulement la réécriture du fichier de configuration de l'application (appelé fichier Manifest dans le cas d'Android®), l'ajout de l'application de création de l'environnement d'exécution 36, celle-ci étant encapsulée dans le deuxième fichier de paquetage 22B, ou en variante avec l'application 34 dans le premier fichier de paquetage 22A comme cela va être décrit par la suite dans le deuxième mode de réalisation, et l'ajout de la bibliothèque de sécurisation 24, si l'ensemble de bibliothèques 27 ne comporte pas déjà une telle bibliothèque.

L'homme du métier remarquera que cette sécurisation ne nécessite aucune modification du code source ou binaire de l'application à sécuriser 34, ni aucune modification du système d'exploitation 20.

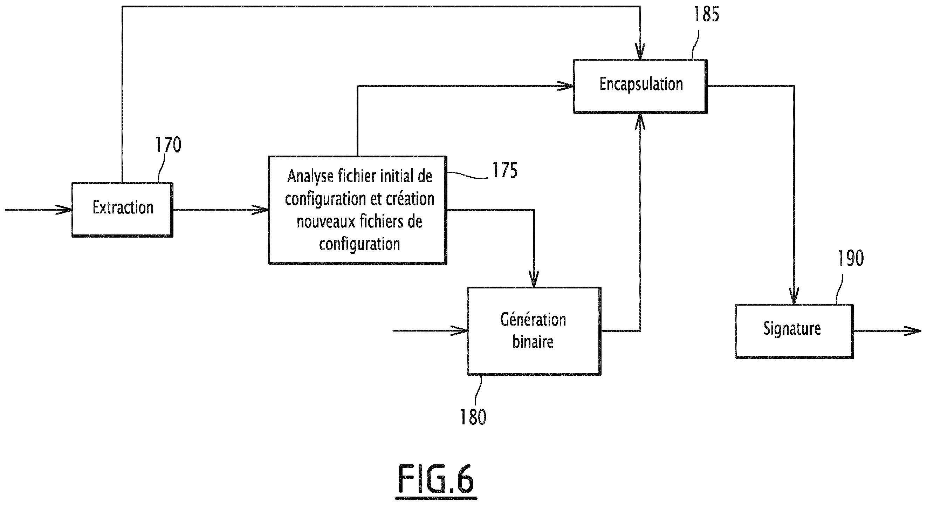

La figure 6 illustre un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, au moins un fichier de paquetage dit sensible est en forme d'un seul fichier de paquetage, à savoir le premier fichier de paquetage 22A. Le premier fichier de paquetage 22A comporte alors le premier fichier de configuration 33, l'application à sécuriser 34 et l'application de création dynamique de l'environnement d'exécution 36. De manière analogue au premier mode de réalisation, l'application à sécuriser 34 et l'application de création dynamique de l'environnement d'exécution 36 sont, par exemple, en forme de fichiers binaires.

Le procédé de génération du seul fichier de paquetage 22A selon le deuxième mode de réalisation va être à présent décrit à l'aide de l'organigramme de la figure 6.

Lors de l'étape initiale 170, l'application à sécuriser 34 et le fichier initial de configuration sont extraits à partir du fichier initial de paquetage et à l'aide des moyens d'extraction 40.

Le fichier initial de configuration ainsi extrait est ensuite utilisé lors de l'étape suivante 175 pour la création du premier fichier de configuration 33.

Le premier fichier de configuration 33 est créé en modifiant le fichier initial de configuration afin que l'application de création de l'environnement d'exécution 36 soit lancée à la place de l'application à sécuriser 34 lors de l'exécution du fichier de paquetage 22A.

Le premier fichier de configuration 33 contient, par exemple, les mêmes déclarations de composant que celles contenues dans le fichier initial de configuration. Les composants déclarés dans le premier fichier de configuration 33 reprennent, par exemple, les mêmes filtres de message que ceux spécifiés dans le fichier initial de configuration pour les composants correspondants.

Les filtres de message, également appelés Intent, pour les activités déclarées dans le fichier initial de configuration sont, par exemple, renommés dans le premier fichier de configuration 33, afin d'empêcher que d'autres applications puissent modifier ces filtres de message.

En complément, les composants sont déclarés dans le premier fichier de configuration 33 comme n'étant pas exportables.

En complément, le nom du processus déclaré dans le premier fichier de configuration 33 est un nom prédéterminé, afin de contrôler la manière dont l'appareil informatique 10 identifie le processus.

À l'issue de la création du premier fichier de configuration 33, le fichier binaire de l'application de création dynamique de l'environnement d'exécution 36 est créé lors de l'étape suivante 180. Le fichier binaire créé est tel que l'application de création dynamique de l'environnement d'exécution 36 est adaptée pour mettre en oeuvre le chargement de la bibliothèque de sécurisation 24, la substitution, parmi un ou des appels de fonction associés à l'application à sécuriser 34, d'au moins un appel à une fonction non sécurisée par un appel à une fonction correspondante de la bibliothèque de sécurisation 24, et le lancement de l'application à sécuriser 34 après ladite substitution.

En complément, l'application de création dynamique de l'environnement d'exécution 36 est adaptée pour verrouiller la bibliothèque de sécurisation 24 préalablement chargée et la ou des substitution(s) d'appel de fonction effectuée(s).

En complément, l'application de création de l'environnement d'exécution 36 est adaptée pour requérir l'authentification de l'utilisateur de l'appareil informatique 10, puis en cas d'authentification réussie, récupérer une clé de déverrouillage de la bibliothèque de sécurisation 24.

En complément, l'application de création de l'environnement d'exécution 36 est adaptée pour intercepter et traiter des messages échangés entre le système d'exploitation et l'application à sécuriser 34, lesdits messages étant traités par la bibliothèque de sécurisation 24. Les messages interceptés concernent notamment la mise en veille, le réveil de l'application à sécuriser 34, le stockage de données dans la première mémoire 14 et l'échange de données avec un autre appareil informatique.

Lors de l'étape suivante 185, le fichier binaire de l'application de création dynamique de l'environnement d'exécution 36 ainsi créé est ensuite encapsulé avec le premier fichier de configuration 33, préalablement créé lors de l'étape 175, et avec le fichier binaire de l'application à sécuriser 34 dans le premier fichier de paquetage 22A. L'homme du métier observera que le fichier binaire de l'application à sécuriser 34 n'est pas modifié lors de la génération du fichier de paquetage 22A suivant le procédé de génération.

Lors de l'étape d'encapsulation 185, le fichier binaire de l'application de création dynamique de l'environnement d'exécution 36 est stocké dans l'emplacement par défaut prévu pour un fichier binaire dans le fichier de paquetage. Le fichier binaire de l'application à sécuriser 34 est stocké dans un emplacement secondaire, ce qui permet également que l'application de création de l'environnement d'exécution 36 soit lancée à la place de l'application à sécuriser 34 lors de l'exécution du fichier de paquetage 22A.

En complément, l'application de génération de fichier(s) de paquetage 25 ajoute également la bibliothèque de sécurisation 24 dans le fichier de paquetage 22A.

En complément, lors de l'étape 190 optionnelle, le fichier de paquetage 22A généré est protégé cryptographiquement avec une clé de protection et à l'aide des moyens cryptographiques 47.

Le fonctionnement de l'appareil informatique 10 selon ce deuxième mode de réalisation est identique à celui décrit pour le premier mode de réalisation en regard des figures 4 et 5.

Les avantages de ce deuxième mode de réalisation sont analogues à ceux du premier mode de réalisation décrit précédemment, et ne sont pas décrits à nouveau. Le procédé de génération selon ce deuxième mode de réalisation présente en outre l'avantage de générer un seul fichier de paquetage 22A pour la sécurisation de ladite application à sécuriser 34. Ceci permet alors de simplifier la procédure d'installation au niveau du système d'exploitation 20, et plus généralement de simplifier le déploiement de cette solution de sécurisation de l'application à sécuriser 34.

On conçoit ainsi que le procédé de génération selon l'invention permet de sécuriser l'application 34 lors de l'exécution du fichier de paquetage tout en limitant les modifications du code du système d'exploitation, de l'environnement applicatif ou encore de l'application à sécuriser 34.

Bien que le procédé de génération de fichiers de paquetage et le procédé de création dynamique de l'environnement d'exécution de l'application à sécuriser, ainsi que le dispositif informatique et l'appareil informatique aient été décrits en relation avec un système d'exploitation comportant une machine virtuelle propre à exécuter l'application, l'homme du métier comprendra que l'invention s'applique également à un système d'exploitation ne comportant pas de machine virtuelle, l'application étant alors exécutée directement par le processeur de l'unité de traitement d'informations.

Selon un autre aspect, l'invention concerne un procédé de création dynamique d'un environnement d'exécution de l'application à sécuriser 34 pour la sécurisation de ladite application 34, le procédé étant mis en oeuvre par l'appareil informatique 10 comprenant l'unité de traitement d'informations 12 et la mémoire 14, la mémoire 14 étant associée à l'unité de traitement d'informations 12 et comportant le système d'exploitation 20, l'application à sécuriser 34 et la bibliothèque de sécurisation 24 comportant au moins une fonction de sécurisation 37A, 37B, 37C, le système d'exploitation 20 comportant l'ensemble 27 de bibliothèques de fonction(s) comprenant la bibliothèque de fonction(s) non sécurisée(s) 48, l'application à sécuriser 34 étant, lors de son exécution, destinée à appeler une fonction de la bibliothèque de fonction(s) non sécurisée(s) 48.

Le procédé de création dynamique de l'environnement d'exécution comprend les étapes suivantes mises, en oeuvre par l'application de création dynamique de l'environnement d'exécution 36 stockée dans la mémoire 14 :
- le chargement 100 de la bibliothèque de sécurisation 24,
- la substitution 110, parmi le ou les appel(s) de fonction associé(s) à ladite application à sécuriser 34, d'au moins un appel à une fonction non sécurisée par un appel à une fonction correspondante 37A, 37B, 37C de la bibliothèque de sécurisation 24, et
- le lancement 140 de l'application à sécuriser 34 après l'étape de substitution 110.

En complément et de manière facultative, l'étape de substitution 110 comporte la suppression d'un lien dynamique entre ladite application à sécuriser 34 et la fonction non sécurisée, et la création d'un lien dynamique de substitution entre ladite application à sécuriser 34 et la fonction correspondante 37A, 37B, 37C de la bibliothèque de sécurisation 24.

En complément et de manière facultative, parmi le ou les appel(s) de fonction associé(s) à ladite application à sécuriser 34, tous les appels à une fonction de stockage de données sont substitués par des appels à la fonction 37A de sécurisation du stockage de données.

En complément et de manière facultative, parmi le ou les appel(s) de fonction associé(s) à ladite application à sécuriser 34, tous les appels à une fonction d'échange de données avec un autre appareil informatique sont substitués par des appels à la fonction 37B de sécurisation d'échange de données avec l'autre appareil informatique.

En complément et de manière facultative, parmi le ou les appel(s) de fonction associé(s) à ladite application à sécuriser 34, tous les appels à une fonction d'ajout d'événements de débogage sont substitués par des appels à la fonction 37C de suppression d'événements de débogage.

En complément et de manière facultative, le procédé de création dynamique de l'environnement d'exécution comprend en outre, avant l'étape de lancement de l'application 140, l'étape 115 de verrouillage de la bibliothèque de sécurisation 24 chargée lors de l'étape de chargement 100 et de la ou des substitution(s) d'appel de fonction effectuée(s) lors de l'étape de substitution 110.

En complément et de manière facultative, le procédé de création dynamique de l'environnement d'exécution comprend en outre, avant l'étape de lancement de l'application 140, l'étape 120 d'authentification de l'utilisateur de l'appareil informatique 10 et de récupération de la clé de déverrouillage de la bibliothèque de sécurisation 24.

En complément et de manière facultative, le procédé de création dynamique de l'environnement d'exécution comprend en outre, avant l'étape de lancement de l'application 140, l'étape 130 d'interception d'un message échangé entre le système d'exploitation 20 et l'application à sécuriser 34, et de traitement dudit message par une fonction correspondante de la bibliothèque de sécurisation 24.

L'application de création de l'environnement d'exécution 36 est de préférence une application dédiée à la ou aux application(s) à sécuriser 34, et est distincte du système d'exploitation 20.

Selon cet autre aspect, l'invention concerne également un produit programme d'ordinateur comportant des instructions logicielles qui, lorsque mises en oeuvre par l'unité de traitement d'informations 12 intégrée à l'appareil informatique 10, met en oeuvre le procédé de création dynamique de l'environnement d'exécution tel que défini ci-dessus.

Selon cet autre aspect, l'invention concerne également l'appareil informatique 10 comprenant l'une unité de traitement d'informations 12, et la mémoire 14 comportant le système d'exploitation 20, au moins une application à sécuriser 34 et la bibliothèque de sécurisation 24 comportant au moins une fonction de sécurisation 37A, 37B, 37C, la mémoire 14 étant associée à l'unité de traitement d'informations 12.

Le système d'exploitation 20 comportant l'ensemble 27 de bibliothèques de fonctions comprenant la bibliothèque de fonction(s) non sécurisée(s) 48, l'application à sécuriser 34 étant destinée à appeler une fonction de la bibliothèque de fonction(s) non sécurisée(s) 48.

La mémoire 14 comporte en outre l'application 36 de création dynamique de l'environnement d'exécution de l'application à sécuriser 34, l'application de création de l'environnement d'exécution 36 comportant les moyens 50 de chargement de la bibliothèque de sécurisation 24, les moyens 52 de substitution, parmi le ou les appel(s) de fonction associé(s) à ladite application à sécuriser 34, d'au moins un appel à une fonction non sécurisée par un appel à une fonction correspondante 37A, 37B, 37C de la bibliothèque de sécurisation 24, et les moyens 58 de lancement de l'application à sécuriser 34 suite à la substitution de l'appel à la fonction non sécurisée par l'appel à la fonction de sécurisation 37A, 37B, 37C.

## Revendications

1. Procédé de génération, à partir d'un fichier initial de paquetage comportant une application à sécuriser (34) et un fichier initial de configuration, d'au moins un fichier de paquetage (22A, 22B) pour la sécurisation de ladite application (34), le procédé de génération étant mis en oeuvre par un dispositif informatique (18) comprenant une unité de traitement d'informations (19A) et une mémoire (19B),
le procédé de génération étant **caractérisé en ce qu'**il comprend les étapes suivantes, mises en oeuvre par une application (25) de génération de fichier(s) de paquetage (22A, 22B), l'application (25) étant stockée dans la mémoire (19B) du dispositif informatique (18) :
- l'extraction (70 ; 170), à partir du fichier initial de paquetage, de l'application à sécuriser (34) et du fichier initial de configuration,
- la création (75 ; 175) d'un premier fichier de configuration (33) à partir du fichier initial de configuration,
- la création (80; 180) d'une application (36) de création dynamique d'un environnement d'exécution de l'application à sécuriser (34), l'application de création dynamique de l'environnement d'exécution (36) étant adaptée pour mettre en oeuvre le chargement (100) d'une bibliothèque de sécurisation (24), la substitution (110), parmi un ou des appel(s) de fonction associé(s) à ladite application à sécuriser (34), d'au moins un appel à une fonction non sécurisée par un appel à une fonction correspondante (37A, 37B, 37C) de la bibliothèque de sécurisation (24), et le lancement (140) de l'application à sécuriser (34) après ladite substitution (110), et
- l'encapsulation (85; 185) du premier fichier de configuration (33) et de l'application à sécuriser (34) dans un premier fichier de paquetage (22A), en l'absence d'une modification du fichier binaire de l'application à sécuriser (34), l'application de création dynamique de l'environnement d'exécution (36) étant encapsulée (185) dans le premier fichier de paquetage (22A) ou bien (80) dans un deuxième fichier de paquetage (22B), le deuxième fichier de paquetage (22B) comportant alors ladite application de création dynamique de l'environnement d'exécution (36) et un deuxième fichier de configuration (35).

2. Procédé selon la revendication 1, dans lequel, lors de l'étape de création du premier fichier de configuration (75 ; 175), le premier fichier de configuration (33) est créé en modifiant le fichier initial de configuration afin que l'application de création de l'environnement d'exécution (36) soit lancée à la place de l'application à sécuriser (34) lors de l'exécution du fichier de paquetage (22A, 22B) correspondant.

3. Procédé selon la revendication 1 ou 2, dans lequel le premier fichier de paquetage (22A) comporte le premier fichier de configuration (33) et l'application à sécuriser (34), et le deuxième fichier de paquetage (22B) comporte le deuxième fichier de configuration (35) et l'application de création de l'environnement d'exécution (36),
dans lequel chaque application parmi l'application à sécuriser (34) et l'application de création de l'environnement d'exécution (36) comprend au moins un composant, chaque fichier de configuration (33, 35) contenant une ou plusieurs déclarations de composant, et
dans lequel le procédé comprend la création (75) du deuxième fichier de configuration (35), le deuxième fichier de configuration (35) contenant les mêmes déclarations de composant que le fichier initial de configuration.

4. Procédé selon la revendication 3, dans lequel au moins un composant déclaré dans chaque fichier de configuration (33, 35) est un fournisseur de contenu, et le fournisseur de contenu est déclaré dans le deuxième fichier de configuration (35) avec une priorité plus élevée que celle du fournisseur de contenu déclaré dans le premier fichier de configuration (33), afin que le fournisseur de contenu de l'application de création de l'environnement d'exécution (36) soit lancé avant le fournisseur de contenu de l'application à sécuriser (34).

5. Procédé selon l'une quelconque des revendications précédentes, dans lequel le premier fichier de paquetage (22A) comporte le premier fichier de configuration (33) et l'application à sécuriser (34), et le deuxième fichier de paquetage (22B) comporte le deuxième fichier de configuration (35) et l'application de création de l'environnement d'exécution (36),
dans lequel le fichier initial de configuration comporte des déclarations d'activité et des filtres de message associés aux activités déclarées, et
dans lequel, lors de l'étape de création du premier fichier de configuration (75), les filtres de message pour les activités déclarées dans le fichier initial de configuration sont supprimés dans le premier fichier de configuration (33).

6. Procédé selon la revendication 1 ou 2, dans lequel le premier fichier de paquetage (22A) comporte le premier fichier de configuration (33), l'application à sécuriser (34) et l'application de création de l'environnement d'exécution (36), et le premier fichier de paquetage (22A) est configuré de sorte que l'application de création de l'environnement d'exécution (36) soit lancée avant l'application à sécuriser (34).

7. Procédé selon l'une quelconque des revendications précédentes, dans lequel, l'application de création dynamique de l'environnement d'exécution (36), crée lors de l'étape de création (80 ; 180), est en outre adaptée pour le filtrage des interactions entre l'application à sécuriser (34) et d'autres applications non sécurisées ou encore des interactions entre l'application à sécuriser (34) et le système d'exploitation (20) selon des règles de filtrages prédéfinies dans l'application de création dynamique de l'environnement d'exécution (36).

8. Procédé selon l'une quelconque des revendications précédentes, dans lequel le procédé comprend en outre la protection cryptographique (90 ; 190), avec au moins une clé de protection, du ou de chaque fichier de paquetage (22A, 22B) généré.

9. Procédé selon la revendication 8, dans lequel le premier fichier de paquetage (22A) comporte le premier fichier de configuration (33) et l'application à sécuriser (34), et le deuxième fichier de paquetage (22B) comporte le deuxième fichier de configuration (35) et l'application de création de l'environnement d'exécution (36), et
dans lequel, lors de l'étape de protection cryptographique (90), la protection cryptographique du premier fichier de paquetage (22A) et le protection cryptographique du deuxième fichier de paquetage (22B) sont effectuées avec la même clé de protection.

10. Produit programme d'ordinateur comportant des instructions logicielles qui, lorsque mis en oeuvre par une unité de traitement d'informations (19A) intégrées à un dispositif informatique (18), met en oeuvre le procédé de génération selon l'une quelconque des revendications précédentes.

11. Dispositif informatique (18) comprenant une unité de traitement d'informations (19A) et une mémoire (19B) associée à l'unité de traitement d'informations (19A),
**caractérisé en ce que** la mémoire (19B) comporte une application (25) de génération, à partir d'un fichier initial de paquetage comportant une application à sécuriser (34) et un fichier initial de configuration, d'au moins un fichier de paquetage (22A, 22B) pour la sécurisation de ladite application (34),
l'application de génération de fichier(s) de paquetage (25) comportant :
+ des moyens (40) d'extraction, à partir du fichier initial de paquetage, de l'application à sécuriser (34) et du fichier initial de configuration,
+ des moyens (42) de création d'un premier fichier de configuration (33) à partir du fichier initial de configuration,
+ des moyens (44) de création d'une application (36) de création dynamique d'un environnement d'exécution de l'application à sécuriser (34), l'application de création dynamique de l'environnement d'exécution (36) étant adaptée pour mettre en oeuvre le chargement (100) d'une bibliothèque de sécurisation (24), la substitution (110), parmi un ou des appel(s) de fonction associé(s) à ladite application à sécuriser (34), d'au moins un appel à une fonction non sécurisée par un appel à une fonction correspondante (37A, 37B, 37C) de la bibliothèque de sécurisation (24), et le lancement (140) de l'application à sécuriser (34) après l'étape de substitution (110), et
+ des moyens (46) d'encapsulation du premier fichier de configuration (33) et de l'application à sécuriser (34) dans un premier fichier de paquetage (22A), en l'absence d'une modification du fichier binaire de l'application à sécuriser (34), l'application de création dynamique de l'environnement d'exécution (36) étant encapsulée (185) dans le premier fichier de paquetage (22A) ou bien (80) dans un deuxième fichier de paquetage (22B), le deuxième fichier de paquetage (22B) comportant alors ladite application de création dynamique de l'environnement d'exécution (36) et un deuxième fichier de configuration (35).

## Patentansprüche

1. Verfahren zur Erzeugung mindestens einer Paketdatei (22A, 22B) zur Sicherung einer Anwendung (34) aus einer Original-Paketdatei mit der zu sichernden Anwendung (34) und einer Original-Konfigurationsdatei, wobei das Erzeugungsverfahren ausgeführt wird durch eine Computervorrichtung (18), umfassend eine Datenverarbeitungseinheit (19A) und einen Speicher (19B),
wobei das Erzeugungsverfahren **dadurch gekennzeichnet ist, dass** es folgende Schritte umfasst, die durch eine Anwendung (25) zur Erzeugung mindestens einer Paketdatei (22A, 22B) ausgeführt werden, wobei die Anwendung (25) im Speicher (19B) der Computervorrichtung (18) gespeichert ist:
- Extrahieren (70; 170) der zu sichernden Anwendung (34) und der Original-Konfigurationsdatei aus der Original-Paketdatei,
- Erstellen (75; 175) einer ersten Konfigurationsdatei (33) aus der Original-Konfigurationsdatei,
- Erstellen (80; 180) einer Anwendung (36) zur dynamischen Erstellung einer Ausführungsumgebung der zu sichernden Anwendung (34), wobei die Anwendung (36) zur dynamischen Erstellung der Ausführungsumgebung geeignet ist, eine Sicherungsbibliothek (24) zu laden (100), den Austausch (110) mindestens eines Aufrufs einer nicht gesicherten Funktion durch einen Aufruf einer entsprechenden Funktion (37A, 37B, 37C) der Sicherungsbibliothek (24) unter den der zu sichernden Anwendung (34) zugeordneten einen oder mehreren Funktionsaufrufen vorzunehmen und die zu sichernde Anwendung (34) nach dem Austausch (110) auszuführen, und
- Verkapseln (85; 185) der ersten Konfigurationsdatei (33) und der zu sichernden Anwendung (34) in einer ersten Paketdatei (22A), ohne die Binärdatei der zu sichernden Anwendung (34) zu ändern, wobei die Anwendung (36) zur dynamischen Erstellung der Ausführungsumgebung in der ersten Paketdatei (22A) oder (80) in einer zweiten Paketdatei (22B) verkapselt ist (185), wobei die zweite Paketdatei (22B) dann die Anwendung (36) und eine zweite Konfigurationsdatei (35) enthält.

2. Verfahren nach Anspruch 1, wobei beim Erstellen der ersten Konfigurationsdatei (75; 175) die erste Konfigurationsdatei (33) durch Ändern der Original-Konfigurationsdatei erstellt wird, damit die Anwendung (36) zur Erstellung der Ausführungsumgebung bei der Ausführung der entsprechenden Paketdatei (22A, 22B) anstelle der zu sichernden Datei (34) ausgeführt wird.

3. Verfahren nach Anspruch 1 oder 2, wobei die erste Paketdatei (22A) die erste Konfigurationsdatei (33) und die zu sichernde Anwendung (34) enthält und die zweite Paketdatei (22B) die zweite Konfigurationsdatei (35) und die Anwendung (36) zur Erstellung der Ausführungsumgebung enthält,
wobei jede von der zu sichernden Anwendung (34) und der Anwendung (36) zur Erstellung der Ausführungsumgebung mindestens eine Komponente umfasst, wobei jede Konfigurationsdatei (33, 35) mindestens eine Komponentenangabe enthält, und
wobei das Verfahren umfasst: Erstellen (75) der zweiten Konfigurationsdatei (35), wobei die zweite Konfigurationsdatei (35) dieselben Komponentenangaben enthält wie die Original-Konfigurationsdatei.

4. Verfahren nach Anspruch 3, wobei mindestens eine in jeder Konfigurationsdatei (33, 35) angegebene Komponente ein Content-Provider ist, und der Content-Provider in der zweiten Konfigurationsdatei (35) mit einer höheren Priorität als die des in der ersten Konfigurationsdatei (33) angegebenen Content-Providers angegeben ist, damit der Content-Provider der Anwendung (36) zur Erstellung der Ausführungsumgebung vor dem Content-Provider der zu sichernden Anwendung (34) ausgeführt wird.

5. Verfahren nach einem der vorstehenden Ansprüche, wobei die erste Paketdatei (22A) die erste Konfigurationsdatei (33) und die zu sichernde Anwendung (34) enthält und die zweite Paketdatei (22B) die zweite Konfigurationsdatei (35) und die Anwendung (36) zur Erstellung der Ausführungsumgebung enthält,
wobei die Original-Konfigurationsdatei Aktivitätsangaben und den Aktivitätsangaben zugeordnete Nachrichtenfilter enthält und
wobei beim Erstellen der ersten Konfigurationsdatei (75) die Nachrichtenfilter der in der Original-Konfigurationsdatei angegebenen Aktivitäten in der ersten Konfigurationsdatei (33) gelöscht werden.

6. Verfahren nach Anspruch 1 oder 2, wobei die erste Paketdatei (22A) die erste Konfigurationsdatei (33), die zu sichernde Anwendung (34) und die Anwendung (36) zur Erstellung der Ausführungsumgebung enthält, und die erste Paketdatei (22A) derart konfiguriert ist, dass die Anwendung (36) zur Erstellung der Ausführungsumgebung vor der zu sichernden Anwendung (34) ausgeführt wird.

7. Verfahren nach einem der vorstehenden Ansprüche, wobei die beim Schritt des Erstellens (80; 180) erstellte Anwendung (36) zur dynamischen Erstellung der Ausführungsumgebung ferner zum Filtern der Interaktionen zwischen der zu sichernden Anwendung (34) und anderen nicht gesicherten Anwendung oder auch der Interaktionen zwischen der zu sichernden Anwendung (34) und dem Betriebssystem (20) gemäß vordefinierten Filterungsregeln der Anwendung (36) geeignet ist.

8. Verfahren nach einem der vorstehenden Ansprüche, wobei das Verfahren ferner umfasst: kryptographisches Schützen (90; 190) mit mindestens einem Schlüssel zum Schutz der bzw. jeder erzeugten Paketdatei (22A, 22B).

9. Verfahren nach Anspruch 8, wobei die erste Paketdatei (22A) die erste Konfigurationsdatei (33) und die zu sichernde Anwendung (34) enthält und die zweite Paketdatei (22B) die zweite Konfigurationsdatei (35) und die Anwendung (36) zur Erstellung der Ausführungsumgebung enthält,
wobei beim Schritt des kryptographischen Schützens (90) der kryptographische Schutz der ersten Paketdatei (22A) und der kryptographische Schutz der zweiten Paketdatei (22B) mit demselben Schlüssel vorgenommen werden.

10. Computerprogrammprodukt, umfassend Software-Befehle, dass bei Ausführung durch eine mit einer Computervorrichtung (18) integrierte Datenverarbeitungseinheit (19A) das Erstellungsverfahren nach einem der vorstehenden Ansprüche ausführt.

11. Computervorrichtung (18), umfassend eine Datenverarbeitungseinheit (19A) und einen der Datenverarbeitungseinheit (19A) zugeordneten Speicher (19B),
**dadurch gekennzeichnet, dass** der Speicher (19B) eine Anwendung (25) zur Erstellung mindestens einer Paketdatei (22A, 22B) zur Sicherung einer zu sichernden Anwendung (34) aus einer Original-Paketdatei, umfassend die Anwendung (34) und eine Original-Konfigurationsdatei, umfasst,
wobei die Anwendung (25) umfasst:
- Mittel (40) zum Extrahieren der zu sichernden Anwendung (34) und der Original-Konfigurationsdatei aus der Original-Paketdatei,
- Mittel (42) zum Erstellen einer ersten Konfigurationsdatei (33) aus der Original-Konfigurationsdatei,
- Mittel (44) zum Erstellen einer Anwendung (36) zur dynamischen Erstellung einer Ausführungsumgebung der zu sichernden Anwendung (34), wobei die Anwendung (36) zur dynamischen Erstellung der Ausführungsumgebung geeignet ist, eine Sicherungsbibliothek (24) zu laden (100), den Austausch (110) mindestens eines Aufrufs einer nicht gesicherten Funktion durch einen Aufruf einer entsprechenden Funktion (37A, 37B, 37C) der Sicherungsbibliothek (24) unter den der zu sichernden Anwendung (34) zugeordneten einen oder mehreren Funktionsaufrufen vorzunehmen und die zu sichernde Anwendung (34) nach dem Austausch (110) auszuführen (140), und
- Mittel (46) zum Verkapseln der ersten Konfigurationsdatei (33) und der zu sichernden Anwendung (34) in einer ersten Paketdatei (22A), ohne die Binärdatei der zu sichernden Anwendung (34) zu ändern, wobei die Anwendung (36) zur dynamischen Erstellung der Ausführungsumgebung in der ersten Paketdatei (22A) oder (80) in einer zweiten Paketdatei (22B) verkapselt ist (185), wobei die zweite Paketdatei (22B) dann die Anwendung (36) und eine zweite Konfigurationsdatei (35) enthält.

## Claims

1. A method for generating, from an initial package file comprising an application to be secured (34) and an initial configuration file, at least one package file (22A, 22B) for securing said application (34), the generating method being implemented by a computing device (18) comprising an information processing unit (19A) and a memory (19B),
the generating method being **characterized in that** it comprises the following steps, carried out by an application (25) for generating package files (22A, 22B), the application (25) being stored in the memory (19B) of the computing device (18):
- extracting (70; 170), from the initial package file, the application to be secured (34) and the initial configuration file,
- creating (75; 175) a first configuration file (33) from the initial configuration file,
- creating (80; 180) an application (36) for dynamically creating an execution environment for the application to be secured (34), the application for the dynamic creation of the execution environment (36) being suitable for implementing the loading (100) of a security library (24), the substitution (110), from a function call or function calls associated with said application to be secured (34), of at least one call to an unsecured function with a call to a corresponding function (37A, 37B, 37C) of the security library (24), and launching (140) the application to be secured (34) after said substitution (110), and
- encapsulating (85; 185) the first configuration file (33) and the application to be secured (34) in a first package file (22A), in the absence of a modification of the binary file of the application to be secured (34), the application for the dynamic creation of the execution environment (36) being encapsulated (185) in the first package file (22A) or (80) in a second package file (22B), the second package file (22B) including said application for the dynamic creation of the execution environment (36) and a second configuration file (35).

2. The method according to claim 1, wherein, during the step for creating the first configuration file (75; 175), the first configuration file (33) is created by modifying the initial configuration file so that the application for creating the execution environment (36) is launched in place of the application to be secured (34) during the execution of the corresponding package file (22A, 22B).

3. The method according to claim 1 or 2, wherein the first package file (22A) includes the first configuration file (33) and the application to be secured (34), and the second package file (22B) includes the second configuration file (35) and the application for creating the execution environment (36),
wherein each application among the application to be secured (34) and the application for creating the execution environment (36) comprises at least one component, each configuration file (33, 35) containing one or more component declarations, and
wherein the method comprises the creation (75) of the second configuration file (35), the second configuration file (35) containing the same component declarations as the initial configuration file.

4. The method according to claim 3, wherein at least one declared component in each configuration file (33, 35) is a content provider, and the content provider is declared in the second configuration file (35) with a higher priority than that of the content provider declared in the first configuration file (33), so that the content provider of the application for creating the execution environment (36) is launched before the content provider of the application to be secured (34).

5. The method according to any one of the preceding claims, wherein the first package file (22A) includes the first configuration file (33) and the application to be secured (34), the second package file (22B) includes the second configuration file (35) and the application for creating the execution environment (36),
wherein the initial configuration file includes activity declarations and message filters associated with the declared activities, and
wherein, during the step for creating the first configuration file (75), the message filters for the activities declared in the initial configuration file are deleted in the first configuration file (33).

6. The method according to claim 1 or 2, wherein the first package file (22A) includes the first configuration file (33), the application to be secured (34) and the application for creating the execution environment (36), and the first package file (22A) is configured so that the application for creating the execution environment (36) is launched before the application to be secured (34).

7. The method according to any one of the preceding claims, wherein, the application for the dynamic creation of the execution environment (36), created during the creation step (80; 180), is further adapted for filtering of the interactions between the application to be secured (34) and other unsecured applications or interactions between the application to be secured (34) and the operating system (20) according to the predefined filtering rules in the application for the dynamic creation of the execution environment (36).

8. The method according to any one of the preceding claims, wherein the method further comprises the cryptographic protection (90; 190), with at least one protection key, of the or each generated package file (22A, 22B).

9. The method according to claim 8, wherein the first package file (22A) includes the first configuration file (33) and the application to be secured (34), and the second package file (22B) includes the second configuration file (35) and the application for creating the execution environment (36), and
wherein, during the cryptographic protection step (90), the cryptographic protection of the first package file (22A) and the cryptographic protection of the second package file (22B) are done with the same protection key.

10. A computer program product including software instructions which, when implemented by an information processing unit (19A) integrated into a computer device (18), implements the generating method according to any one of the preceding claims.

11. A computing device (18) comprising an information processing unit (19A) and a memory (19B) that is associated with the information processing unit (19A),
**characterized in that** the memory (19B) includes an application (25) for generating, from an initial package file including an application to be secured (34) and an initial configuration file, at least one package file (22A, 22B) for securing said application (34),
the application for generating package file(s) (25) including:
+ means (40) for extracting the application to be secured (34) and the initial configuration file from the initial package file,
+ means (42) for creating a first configuration file (33) from the initial configuration file,
+ means (44) for creating an application (36) for the dynamic creation of an execution environment for the application to be secured (34), the application for the dynamic creation of the execution environment (36) being suitable for implementing the loading (100) of a security library (24), substituting (110), from among one or more function call(s) associated with an application to be secured (34), at least one call to an unsecured function with a call to a corresponding function (37A, 37B, 37C) of the security library (24), and launching (140) the application to be secured (34) after the substitution step (110), and
+ means (46) for encapsulating the first configuration file (33) and the application to be secured (34) in a first package file (22A), in the absence of a modification of the binary file of the application to be secured (34), the application for the dynamic creation of the execution environment (36) being encapsulated (185) in the first package file (22A) or (80) in a second package file (22B), the second package file (22B) then including said application for the dynamic creation of the execution environment (36) and a second configuration file (35).
